(19) Europäisches Patentamt
European Patent Office
Office européen des brevets

(11) EP 4 579 559 A1

(12) EUROPEAN PATENT APPLICATION

(43) Date of publication:
02.07.2025 Bulletin 2025/27

(51) International Patent Classification (IPC):
G06Q 30/0241 (2023.01)    G06Q 30/0282 (2023.01)
G06Q 30/0601 (2023.01)    G06Q 50/00 (2024.01)

(21) Application number: 24221003.7

(22) Date of filing: 18.12.2024

(52) Cooperative Patent Classification (CPC):
G06Q 30/0277; G06Q 30/0282; G06Q 30/0631;
G06Q 50/01; G06F 21/6209

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.12.2023 CN 202311853512

(71) Applicant: Beijing Youzhuju Network Technology
Co., Ltd.
Beijing 101299 (CN)

(72) Inventors:
• HE, Pan
Beijing 100028 (CN)
• CHEN, Mutong
Beijing 100028 (CN)
• HOU, Yu
Beijing 100028 (CN)
• YU, Senyang
Beijing 100028 (CN)

(74) Representative: Dentons UK and Middle East LLP
One Fleet Place
London EC4M 7WS (GB)

(54) METHOD FOR INFORMATION RECOMMENDATION, APPARATUS, ELECTRONIC DEVICE, AND STORAGE MEDIUM

(57) The disclosure relates to a method for information recommendation, an apparatus, an electronic device, and a storage medium. The method includes: determining a historical interaction parameter of a target user for associated information of each candidate object in a candidate object set; determining a target interaction parameter corresponding to each candidate object; ranking the candidate objects in the candidate object set based on the historical interaction parameter of the target user for the associated information of each candidate object and the target interaction parameter corresponding to each candidate object, to obtain a ranking result; and recommending, based on the ranking result, the associated information of the candidate objects to the target user.

FIG. 3

EP 4 579 559 A1

## Description

### FIELD

The present disclosure relates to the field of Internet technologies, and in particular, to a method for information recommendation, an apparatus, an electronic device, and a storage medium.

### BACKGROUND

In the real world, many online platforms, merchants, and brands have adopted rules for user level classification to distinguish rights and privileges of different users. User levels are usually evaluated based on factors such as user activity, contribution, reputation, and the like. Users at different levels enjoy different rights and privileges, such as more exposure opportunities, higher permissions, better services, and the like.

Generally, the processing method and the number of times of processing the recommended information by the user directly affect the level of the user, thereby affecting the rights and interests of the user. However, the existing method for information recommendation ignores the needs of users who wish to quickly upgrade their levels and enjoy more rights.

### SUMMARY

In order to solve the above technical problems or at least partially solve the above technical problems, the present disclosure provides a method for information recommendation, an apparatus, an electronic device, and a storage medium.

In a first aspect, the present disclosure provides a method for information recommendation, comprising:

> determining a historical interaction parameter of a target user for associated information of each candidate object in a candidate object set;
> determining a target interaction parameter corresponding to each candidate object;
> ranking the candidate objects in the candidate object set based on the historical interaction parameter of the target user for the associated information of each candidate object and the target interaction parameter corresponding to each candidate object, to obtain a ranking result; and
> recommending, based on the ranking result, the associated information of the candidate objects to the target user.

In a second aspect, the present disclosure further provides an apparatus for information recommendation, comprising:

> a first determination module configured to determine a historical interaction parameter of a target user for associated information of each candidate object in a candidate object set;
a second determination module configured to determine a target interaction parameter corresponding to each candidate object;
a ranking module configured to rank the candidate objects in the candidate object set based on the historical interaction parameter of the target user for the associated information of each candidate object and the target interaction parameter corresponding to each candidate object, to obtain a ranking result; and
a recommendation module configured to recommend, based on the ranking result, the associated information of the candidate objects to the target user.

In a third aspect, the present disclosure further provides an electronic device, where the electronic device includes:

> one or more processors;
> a storage apparatus configured to store one or more programs;
> where the one or more programs, when executed by the one or more processors, cause the one or more processors to implement the method for information recommendation as described above.

In a fourth aspect, the present disclosure further provides a computer-readable storage medium having a computer program stored thereon, where the program, when executed by a processor, causes the method for information recommendation as described above to be implemented.

The technical solutions provided in the embodiments of the present disclosure have the following advantages over the prior art:

The technical solutions provided in the embodiments of the present disclosure set that a historical interaction parameter of a target user for associated information of each candidate object in a candidate object set is determined; a target interaction parameter corresponding to each candidate object is determined; the candidate objects in the candidate object set are ranked based on the historical interaction parameter of the target user for the associated information of each candidate object and the target interaction parameter corresponding to each candidate object, to obtain a ranking result; and the associated information of the candidate objects is recommended to the target user based on the ranking result. The essence is to respectively evaluate the difficulty of upgrading the level of the user corresponding to each candidate object and perform information recommendation based on the difficulty. In this way, the user can more easily access the information related to the candidate object corresponding to the level that is easily upgraded, thereby achieving the purpose of assisting the user to quickly upgrade the level and enjoy more rights faster.

## BRIEF DESCRIPTION OF DRAWINGS

The accompanying drawings, which are incorporated into and constitute a part of this specification, illustrate embodiments consistent with the present disclosure and, together with the description, serve to explain the principles of the present disclosure.
In order to more clearly illustrate the technical solutions in the embodiments of the present disclosure or in the prior art, the accompanying drawings for describing the embodiments or the prior art will be briefly described below. Apparently, those skilled in the art can derive other drawings from these accompanying drawings without creative efforts.

FIG. 1 is a flowchart of a method for information recommendation according to an embodiment of the present disclosure;
FIG. 2 is a flowchart of a specific implementation method of S130 according to an embodiment of the present disclosure;
FIG. 3 is a schematic diagram of a method for information recommendation according to an embodiment of the present disclosure;
FIG. 4 is a schematic diagram of a structure of an apparatus for information recommendation according to an embodiment of the present disclosure; and
FIG. 5 is a schematic diagram of a structure of an electronic device according to an embodiment of the present disclosure.

## DETAILED DESCRIPTION

In order to more clearly understand the above objectives, features, and advantages of the present disclosure, the solutions of the present disclosure will be further described below. It should be noted that, in the case of no conflict, the embodiments of the present disclosure and the features in the embodiments may be combined with each other.
Many specific details are set forth in the following description to fully understand the present disclosure, but the present disclosure may also be implemented in other ways different from those described herein; obviously, the embodiments in the description are only some embodiments of the present disclosure, but not all of the embodiments.

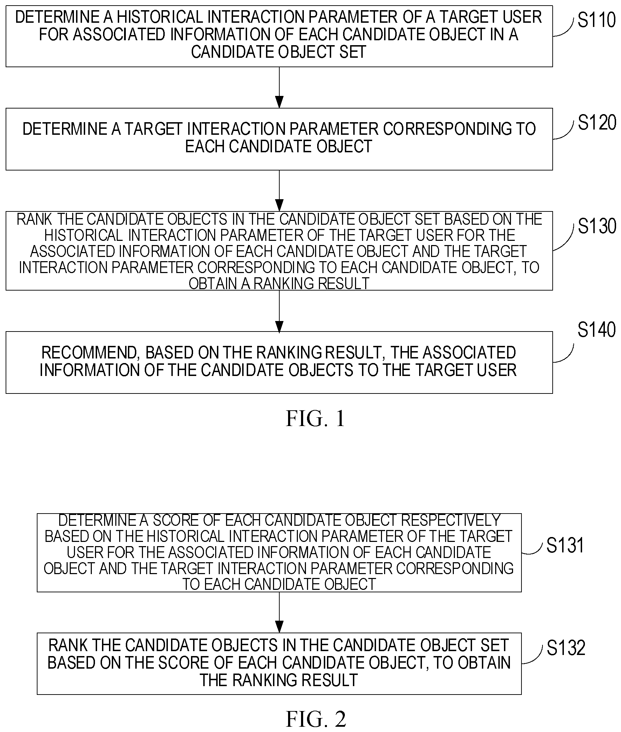

FIG. 1 is a flowchart of a method for information recommendation according to an embodiment of the present disclosure. This embodiment is applicable to a scenario where information is recommended in a client. The method may be performed by an apparatus for information recommendation. The apparatus may be implemented in a manner of software and/or hardware. The apparatus may be configured in an electronic device, for example, a terminal, and specifically includes but is not limited to a smart phone, a palmtop computer, a tablet computer, a wearable device with a display screen, a desktop computer, a notebook computer, an all-in-one machine, a smart home device, and the like. Alternatively, this embodiment is applicable to a case where information is recommended in a server. The method may be performed by an apparatus for information recommendation. The apparatus may be implemented in a manner of software and/or hardware. The apparatus may be configured in an electronic device, for example, a server.
As shown in FIG. 1, the method may specifically include the following steps.
S110: Determine a historical interaction parameter of a target user for associated information of each candidate object in a candidate object set.
The target user may be, for example, a user whose level is to be upgraded. In practice, the target user may be a specified user. Alternatively, the target user may be selected from users of a platform or an application based on a predetermined screening rule. Alternatively, the target user may be selected from potential customers and/or repeat customers of a brand, a store, a commodity, or the like based on a predetermined screening rule.
The candidate object may be, for example, a subject of information that is expected to be recommended to the target user. In the field of e-commerce, optionally, the candidate object may be a commodity, a brand, a store, or the like.
The candidate object set is a set with candidate objects as elements. For example, if the candidate object is a commodity, the candidate object set is a set of commodities, and the candidate object set includes a plurality of commodities. If the candidate object is a brand, the candidate object set is a set of brands, and the candidate object set includes a plurality of brands.
The associated information of the candidate object may be, for example, information used to introduce the candidate object to the user. That is, the associated information of the candidate object may be information used to attract traffic for the candidate object and includes publicity information of the candidate object. For example, the associated information of the candidate object may specifically include one or more of an advertisement, a star map, natural content, a live broadcast, and a search. The advertisement may be, for example, a network advertisement published by a merchant and used to upgrade the candidate object. The star map may be, for example, a picture or video published by an expert and used to introduce the candidate object. The natural content is a text, a picture, a video, or the like related to the candidate object and published by an ordinary user. The expert may be, for example, a person who has rich experience and rich knowledge in a specific field or a person who can have influence and appeal to ordinary users in a specific field. The ordinary user may be, for example, a person who is not an expert. In some scenarios, the expert plays a leading role for ordinary users. For example, a fashion expert usually has unique insights into fashion and superb matching skills, and ordinary users will follow the expert to learn how to match.

The target user may perform an interaction operation on the associated information of the candidate object, for example, the target user may like, forward, collect, browse the associated information of the candidate object, or the like.

The historical interaction parameter of the target user for the associated information of the candidate object may include, for example, at least one of the following: a number of likes, a number of forwards, a number of collects, a browsing duration, a number of searches, and a number of browses of the target user for the associated information of the candidate object.

S120: Determine a target interaction parameter corresponding to each candidate object.

The target interaction parameter may be, for example, a target set to help the user upgrade the level.

In some embodiments, the target interaction parameter corresponding to each candidate object may be specified randomly.

In some other embodiments, the number of interactions of the user with the candidate object directly affects the level of the user. In other words, different user levels have different requirements for the number of interactions and/or the duration of interactions. Based on this, optionally, the target interaction parameter is configured to be associated with a target level.

Further, a specific implementation method of this step is configured to include: determining a current level of the target user corresponding to each candidate object; determining a target level corresponding to each candidate object based on the current level of the target user corresponding to each candidate object; and determining the target interaction parameter corresponding to each candidate object based on the target level corresponding to each candidate object.

Optionally, in practice, each candidate object has a corresponding rule for level classification. The rule for level classification of the candidate object specifies how many levels there are and a minimum requirement for reaching each level. The minimum requirement for each level may be reflected through a level determination condition.

Determining the current level of the target user corresponding to each candidate object includes: obtaining, for each candidate object, a level determination condition corresponding to the candidate object; and determining the current level of the target user corresponding to the candidate object based on the historical interaction parameter of the target user for the associated information of the candidate object and the level determination condition.

For the same candidate object, the target level is higher than the current level of the target user. Optionally, the target level is a next level of the current level of the target user. For example, if a total of three levels is set for a specific candidate object, which are arranged in an ascending order as a first level, a second level, and a third level, if the current level of the target user is the second level, the target level is the third level.

Optionally, determining the target interaction parameter corresponding to each candidate object based on the target level corresponding to each candidate object may include: for each candidate object, using a minimum requirement for reaching the target level corresponding to the candidate object as the target interaction parameter corresponding to the candidate object.

It should be noted that in practice, for different candidate objects, the respective target levels may be the same or different, and the respective target interaction parameters may be the same or different.

It should also be noted that if there are a plurality of target users, for a same candidate object, the target levels corresponding to different target users may be the same or different.

S130: Rank the candidate objects in the candidate object set based on the historical interaction parameter of the target user for the associated information of each candidate object and the target interaction parameter corresponding to each candidate object, to obtain a ranking result.

There are various implementation methods for this step, which are not limited in this application. For example, referring to FIG. 2, the implementation method for this step includes:

S131: Determine a score of each candidate object respectively based on the historical interaction parameter of the target user for the associated information of each candidate object and the target interaction parameter corresponding to each candidate object.

As described above, each of the candidate objects in the candidate object set has a corresponding rule for level classification. The rule for level classification corresponding to the candidate object specifies how many levels there are in total and a minimum requirement for reaching each level. The rules for level classification corresponding to different candidate objects may be completely the same, or completely different, or partially the same. For different candidate objects, the target level of the user may be the same or different, and the current level of the user may be the same or different. In addition, for different candidate objects, even if the rules for level classification are completely the same, the target level of the user is the same, and the current level of the user is also the same, but because the current historical interaction parameter of the user may be different, it will also result in different difficulties for upgrading the user level for different candidate objects.

For example, it is assumed that the candidate object 1 refers to Brand 1, and the candidate object 2 refers to Brand 2. Brand 1 and Brand 2 have the same rule for level classification, and it is specified that a total of three levels is configured. The minimum requirement for reaching the second level includes three likes for brand-related information, and the minimum requirement for reaching the third level includes ten likes for brand-related information. If the number of likes of the user for Brand 1-related information is three, and the number of likes of the user for Brand 2-related information is eight. Obviously, for Brand 1 and Brand 2, the user is at the second level. If the target interaction parameters for Brand 1 and Brand 2 both include ten likes. For Brand 1, the user needs seven more likes to upgrade to the third level; while for Brand 2, the user needs two more likes to upgrade to the third level. Obviously, compared with Brand 1, Brand 2 is easier to achieve a rapid upgrade of the user level.

The score of the candidate object may be, for example, data used to represent the represent the level configured for the candidate object and the difficulty of quickly improving the user level. Optionally, a larger score of the candidate object indicates a lower difficulty of upgrading the user level.

S132: Rank the candidate objects in the candidate object set based on the score of each candidate object, to obtain the ranking result.

In S132, the purpose of ranking the candidate objects in the candidate object set is to determine which of the target levels corresponding to the candidate objects in the candidate object set are easy to reach and which are difficult to reach.

S140: Recommend, based on the ranking result, the associated information of the candidate objects to the target user.

There are various implementation methods for this step, which are not limited in this application. For example, the implementation method for this step includes: recommending the associated information of the top P candidate objects in the ranking result to the target user; or increasing the presenting number of the top P candidate objects in the ranking result; or moving forward the positions of the associated information of the top P candidate objects in the ranking result in a sequence of all recommended information.

The above technical solution sets that a historical interaction parameter of a target user for associated information of each candidate object in a candidate object set is determined; a target interaction parameter corresponding to each candidate object is determined; the candidate objects in the candidate object set are ranked based on the historical interaction parameter of the target user for the associated information of each candidate object and the target interaction parameter corresponding to each candidate object, to obtain a ranking result; and the associated information of the candidate objects is recommended to the target user based on the ranking result. The essence is to respectively evaluate the difficulty of upgrading the level of the user corresponding to each candidate object and perform information recommendation based on the difficulty. In this way, the user can more easily access the information related to the candidate object corresponding to the level that is easily upgraded, thereby achieving the purpose of assisting the user to quickly upgrade the level and enjoy more rights faster.

In an embodiment, optionally, the specific implementation method for S131 includes: calculating a difference between the target interaction parameter corresponding to each candidate object and the historical interaction parameter of the target user for the associated information of each candidate object; and determining the score of each candidate object respectively based on the difference b corresponding to each candidate object. Optionally, a smaller difference corresponding to the candidate object indicates a larger score of the candidate object, which indicates that it is easier to assist the user in upgrading the user level corresponding to the candidate object.

Further, the score of the $i^{th}$ candidate object may be obtained through the following formula:

$$K_i = f_i(b_i)$$

Where $f_i(\ )$ represents formula for score calculation applicable to the $i^{th}$ candidate object in the candidate object set, $K_i$ is the score of the $i^{th}$ candidate object, $b_i$ is a difference between the target interaction parameter $a_i$ corresponding to the $i^{th}$ candidate object and the historical interaction parameter $c_i$ of the target user for the associated information of the $i^{th}$ candidate object, and $b_i = a_i - c_i$.

In another embodiment, S131 may include: obtaining a basic score corresponding to each candidate object; and determining the score of each candidate object respectively based on the historical interaction parameter of the target user for the associated information of each candidate object, the target interaction parameter corresponding to each candidate object, and the basic score corresponding to each candidate object.

The basic score is a score specified in advance. The basic score corresponds to the candidate object, that is, if the candidate objects are different, the basic scores may be different. In addition, the basic score may also correspond to the current level and/or the target level of the target user. The basic score corresponds to the current level of the target user, that is, if the current levels of the target user are different, the basic scores may be different. The basic score corresponds to the target level, that is, if the target levels are different, the basic scores may be different.

Further, S131 may include: obtaining a basic score corresponding to each candidate object; calculating a difference between the target interaction parameter corresponding to each candidate object and the historical interaction parameter of the target user for the associated information of each candidate object; and determining, for each candidate object, respective scores of the candidate object respectively based on the difference corresponding to each candidate object and the basic score corresponding to each candidate object.

Further, the score of the i$^{th}$ candidate object may be obtained through the following formula:

$$K_i = d_i \cdot f_i(b_i)$$

where $f_i(\ )$ represents a formula for score calculation applicable to the i$^{th}$ candidate object in the candidate object set, $K_i$ is the score of the i$^{th}$ candidate object, $b_i$ is a difference between the target interaction parameter $a_i$ corresponding to the i$^{th}$ candidate object and the historical interaction parameter $c_i$ of the target user for the associated information of the i$^{th}$ h candidate object, and $b_i = a_i - c_i$. $d_i$ is a basic score corresponding to the i$^{th}$ candidate object.

In another embodiment, historical interaction operations of the target user for the associated information of the candidate object include historical interaction operations of M types; S131 may include: determining, for each candidate object, respective scores of the candidate object under the M types respectively based on the historical interaction parameter of the target user for the associated information of the candidate object and the target interaction parameter; and determining a final score of the candidate object based on the scores of the candidate object under the M types; and S 132 may include: ranking the candidate objects in the candidate object set based on the final score of each candidate object, to obtain the ranking result; where M is a positive integer.

Based on the above technical solution, optionally, the determining the final score of the candidate object based on the scores of the candidate object under the M types includes: using a maximum value of the scores of the candidate object under the M types as the final score of the candidate object. In addition, an average value of the scores of the candidate object under the M types may also be used as the final score of the candidate object.

For example, it is assumed that the historical interaction operations of the target user for the associated information of the candidate object includes three types of historical interaction operations, namely, like, forward, and collect. The candidate object set includes three candidate objects, namely, Brand 1, Brand 2, and Brand 3. In addition, it is assumed that for Brand 1, Brand 2, and Brand 3, the formulas for score calculation corresponding to the like operation, the forward operation, and the collect operation may all be expressed as

$$K = d(20 - 2b), \qquad (1)$$

where b is a difference between the target interaction parameter and the historical interaction parameter, d is a basic score of the brand, the basic score of Brand 1 is 1, the basic score of Brand 2 is 1.1, and the basic score of Brand 3 is 1.2. It is configured that the final score of any brand is a maximum value of the scores of the brand under the three types.

If the current level of the user is the second level and the target level is the third level for Brand 1, Brand 2, and Brand 3, the target interaction parameter corresponding to the third level includes ten likes, or five forwards, or five collects. The number of historical likes of the target user for the associated information of Brand 1 is two, the number of forwards is one, and the number of collects is four. The number of historical likes of the target user for the associated information of Brand 2 is eight, the number of forwards is three, and the number of collects is two. The number of historical likes of the target user for the associated information of Brand 3 is four, the number of forwards is four, and the number of collects is two.

In order to reach the third level, for Brand 1, the user needs eight more likes, four more forwards, and one more collect. Eight likes, four forwards, and one collect is the difference mentioned above. d is 1. Because eight more likes are needed, b is set to 8. The value is brought into Formula (1) to obtain the score of Brand 1 under the like type, which is 4 (referred to as score 1 hereinafter). Because four more forwards are needed, b is set to 4. The value is brought into Formula (1) to obtain the score of Brand 1 under the forward type, which is 12 (referred to as score 2 hereinafter). Because one more collect is needed, b is set to 1. The value is brought into Formula (1) to obtain the score of Brand 1 under the collect type, which is 18 (referred to as score 3 hereinafter). Because the maximum value of the score 1, the score 2, and the score 3 is a value of the score 3, it is determined that the final score of Brand 1 is 18.

Similarly, in order to reach the third level, for Brand 2, the user needs two more likes, two more forwards, and three more collects. Two likes, two forwards, and three collects is the difference mentioned above. d is 1.1. Because two more likes are needed, b is set to 2. The value is brought into Formula (1) to obtain the score of Brand 2 under the like type, which is 17.6 (referred to as score 4 hereinafter). Because two more forwards are needed, b is set to 2. The value is brought into Formula (1) to obtain the score of Brand 2 under the forward type, which is 17.6 (referred to as score 5 hereinafter). Because three more collects are needed, b is set to 3. The value is brought into Formula (1) to obtain the score of Brand 2 under the collect type, which is 15.4 (referred to as score 6 hereinafter). Because the maximum values of the score 4, the score 5, and the score 6 are values of the score 5 and the score 4, it is determined that the final score of Brand 2 is 17.6.

In order to reach the third level, for Brand 3, the user needs six more likes, one more forward, and three more collects. Six likes, one forward, and three collects is the difference mentioned above. d is 1.2. Because six more likes are needed, b is set to 6. The value is brought into Formula (1) to obtain the score of Brand 3 under the like type, which is 9.6 (referred to as score 7 hereinafter).

Because one more forward is needed, b is set to 1. The value is brought into Formula (1) to obtain the score of Brand 3 under the forward type, which is 21.6 (referred to as score 8 hereinafter). Because three more collects are needed, b is set to 3. The value is brought into Formula (1) to obtain the score of Brand 3 under the collect type, which is 16.8 (referred to as score 9 hereinafter). Because the maximum value of the score 7, the score 8, and the score 9 is a value of the score 8, it is determined that the final score of Brand 3 is 21.6. Subsequently, ranking is performed based on the final score of Brand 1, the final score of Brand 2, and the final score of Brand 3.

Because in any type, a smaller difference between the target interaction parameter corresponding to the candidate object and the historical interaction parameter of the target user for the associated information of the candidate object indicates a larger score, which means that it is easier to upgrade the level of the candidate object. Selecting the maximum score under the M types as the final score of the candidate object can more intuitively reflect the difficulty of upgrading the level of the candidate object.

It may be understood that before the technical solution disclosed in each embodiment of the present disclosure is used, the user should be informed of the type, the usage scope, the usage scenarios, etc. of the personal information involved in the present disclosure through an appropriate method in accordance with relevant laws and regulations, and the user's authorization should be obtained.

For example, in response to receiving a user's active request, a prompt message is sent to the user to explicitly prompt the user that the operation requested by the user will need to obtain and use the user's personal information. Therefore, the user can choose, based on the prompt information, whether to provide personal information to software or hardware such as an electronic device, an application, a server, or a storage medium that performs the operation of the technical solution of the present disclosure.

As an optional but non-limiting implementation method, for example, the method of sending a prompt message to a user in response to receiving an active request from the user may be a pop-up window, and the prompt message may be presented in text in the pop-up window. In addition, the pop-up window may also carry a selection control for the user to select "agree" or "disagree" to provide personal information to the electronic device.

It may be understood that the above notification and user authorization obtaining process are only schematic and do not limit the implementation method of the present disclosure. Other methods that meet relevant laws and regulations may also be applied in the implementation method of the present disclosure.

It should be noted that for the foregoing method embodiments, for the purpose of simple description, they are all expressed as a series of action combinations, but those skilled in the art should know that the present disclosure is not limited by the order of the described actions, because according to the present disclosure, some steps may be performed in other orders or simultaneously. Secondly, those skilled in the art should also know that the embodiments described in the specification are all preferred embodiments, and the actions and modules involved are not necessarily required by the present disclosure.

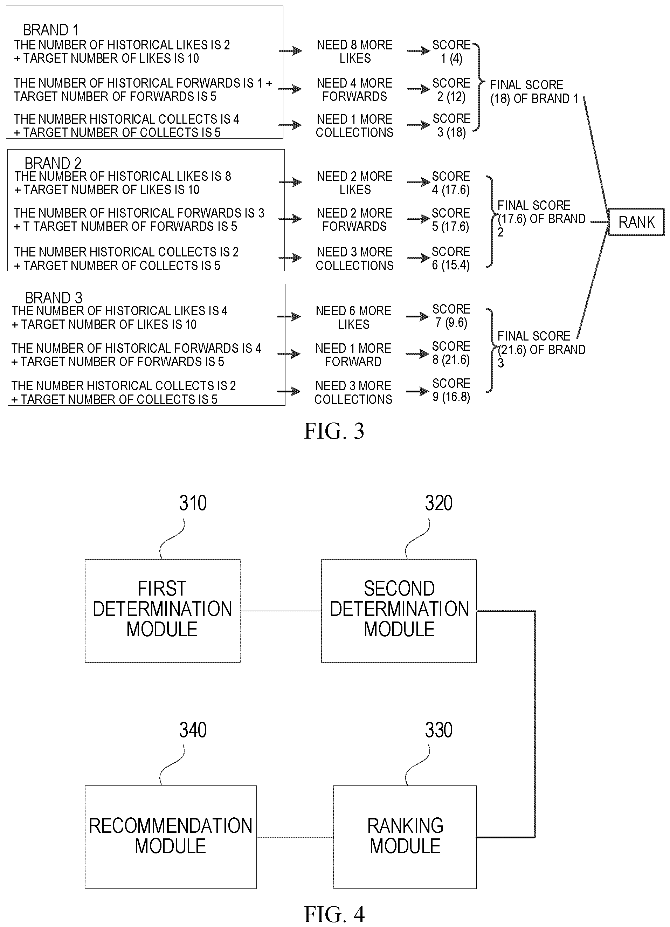

FIG. 4 is a schematic diagram of a structure of an apparatus for information recommendation according to an embodiment of the present disclosure. The apparatus for information recommendation provided in this embodiment of the present disclosure may be configured in a client, or may be configured in a server. Referring to FIG. 4, the apparatus for information recommendation specifically includes:

a first determination module 310 configured to determine a historical interaction parameter of a target user for associated information of each candidate object in a candidate object set;
a second determination module 320 configured to determine a target interaction parameter corresponding to each candidate object;
a ranking module 330 configured to rank the candidate objects in the candidate object set based on the historical interaction parameter of the target user for the associated information of each candidate object and the target interaction parameter corresponding to each candidate object, to obtain a ranking result; and
a recommendation module 340 configured to recommend, based on the ranking result, the associated information of the candidate objects to the target user.

Further, the second determination module 320 is configured to:

determine a current level of the target user corresponding to each candidate object;
determine a target level corresponding to each candidate object based on the current level of the target user corresponding to each candidate object; and
determine the target interaction parameter corresponding to each candidate object based on the target level corresponding to each candidate object.

Further, the ranking module 330 is configured to:

determine a score of each candidate object respectively based on the historical interaction parameter of the target user for the associated information of each candidate object and the target interaction parameter corresponding to each candidate object; and
rank the candidate objects in the candidate object set based on the score of each candidate object, to obtain the ranking result.

Further, the ranking module 330 is configured to:

obtain a basic score corresponding to each candidate object; and
determine the score of each candidate object respectively based on the historical interaction parameter of the target user for the associated information of each candidate object, the target interaction parameter corresponding to each candidate object, and the basic score corresponding to each candidate object.

Further, historical interaction operations of the target user for the associated information of the candidate object include historical interaction operations of M types; and the ranking module 330 is configured to:

determine, for each candidate object, respective scores of the candidate object under the M types respectively based on the historical interaction parameter of the target user for the associated information of the candidate object and the target interaction parameter; and
determine a final score of the candidate object based on the scores of the candidate object under the M types; and
rank the candidate objects in the candidate object set based on the final score of each candidate object, to obtain the ranking result;
where M is a positive integer.

Further, the ranking module 330 is configured to:
use a maximum value of the scores of the candidate object under the M types as the final score of the candidate object.

Further, the second determination module 320 is configured to:

obtain, for each candidate object, a level determination condition corresponding to the candidate object; and

determine the current level of the target user corresponding to the candidate object based on the historical interaction parameter of the target user for the associated information of the candidate object and the level determination condition.

The information recommendation apparatus provided in this embodiment of the present disclosure may perform the steps performed by the client or the server in the method for information recommendation provided in the method embodiment of the present disclosure and has corresponding functional modules and beneficial effects. Details are not described herein again.

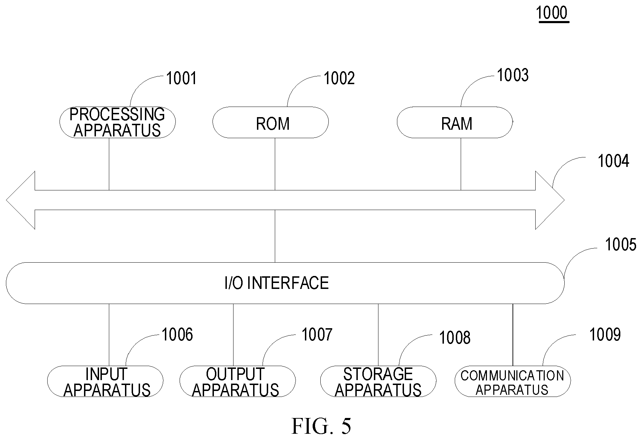

FIG. 5 is a schematic diagram of a structure of an electronic device according to an embodiment of the present disclosure. Reference is made specifically to FIG. 5 below, which shows a schematic diagram of a structure suitable for implementing the electronic device 1000 in the embodiment of the present disclosure. The electronic device 1000 in this embodiment of the present disclosure may include but is not limited to mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer and smart home devices. The electronic device shown in FIG. 5 is merely an example and shall not impose any limitation on the function and scope of use of the embodiments of the present disclosure.

As shown in FIG. 5, the electronic device 1000 may include a processing apparatus (for example, a central processor, a graphics processor, and the like) 1001 that may perform various appropriate actions and processing in accordance with a program stored in a read-only memory (ROM) 1002 or a program loaded from a storage apparatus 1008 into a random access memory (RAM) 1003 to implement the method for information recommendation in the embodiments described in the present disclosure. The RAM 1003 further stores various programs and information required for the operation of the electronic device 1000. The processing apparatus 1001, the ROM 1002, and the RAM 1003 are connected to each other through a bus 1004. An input/output (I/O) interface 1005 is also connected to the bus 1004.

Generally, the following apparatuses may be connected to the I/O interface 1005: an input apparatus 1006 including, for example, a touch screen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a tape and a hard disk; and a communication apparatus 1009. The communication apparatus 1009 may allow the electronic device 1000 to perform wireless or wired communication with other devices to exchange information. Although FIG. 5 shows the electronic device 1000 having various apparatuses, it should be understood that it is not required to implement or have all of the shown apparatuses. It may be an alternative to implement or have more or fewer apparatuses.

In particular, according to an embodiment of the present disclosure, the process described above with reference to the flowcharts may be implemented as a computer software program. For example, this embodiment of the present disclosure includes a computer program product, which includes a computer program carried on a non-transitory computer-readable medium, where the computer program includes program code for performing the method shown in the flowchart, to implement the method for information recommendation described above. In such an embodiment, the computer program may be downloaded from a network through the communication apparatus 1009 and installed, installed from the storage apparatus 1008, or installed from the ROM 1002. When the computer program is executed by the processing apparatus 1001, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include an information signal propagated in a baseband or as a part of a carrier, the information signal carrying computer-readable program code. The propagated information signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to electric wires, optical cables, radio frequency (RF), etc., or any suitable combination thereof.

In some implementations, the client and the server may communicate using any known or future-developed network protocol such as a HyperText Transfer Protocol (HTTP) and may be connected to a digital information communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any known or future-developed network.

The above computer-readable medium may be included in the above electronic device. Alternatively, the computer-readable medium may exist independently, without being assembled into the electronic device.

The above computer-readable medium carries one or more programs, and when the one or more programs are executed by the electronic device, the electronic device is caused to:

determine a historical interaction parameter of a target user for associated information of each candidate object in a candidate object set;
determine a target interaction parameter corresponding to each candidate object;
rank the candidate objects in the candidate object set based on the historical interaction parameter of the target user for the associated information of each candidate object and the target interaction parameter corresponding to each candidate object, to obtain a ranking result; and
recommend, based on the ranking result, the associated information of the candidate objects to the target user.

Optionally, when the one or more programs are executed by the electronic device, the electronic device may also perform other steps described in the above embodiments.

The computer program code for performing the operations in the present disclosure may be written in one or more programming languages or a combination thereof, where the programming languages include, but are not limited to, an object-oriented programming language such as Java, Smalltalk, and C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving the remote computer, the remote computer may be connected to the computer of the user over any type of network, including a local area network (LAN) or a wide area network (WAN), or may be connected to an external computer (for example, connected over the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or by a combination of dedicated hardware and computer instructions.

The related units described in the embodiments of the present disclosure may be implemented by means of software, or by means of hardware. The name of a unit does not constitute a limitation on the unit itself in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include but is not limited to electronic, magnetic, optical, electromagnetic, infrared, or semiconductor systems, apparatuses, or devices, or any suitable combination thereof. A more specific example of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

According to one or more embodiments of the present disclosure, the present disclosure provides an electronic device, including:

> one or more processors; and
> a memory configured to store one or more programs, where when the one or more programs are executed by the one or more processors, the one or more processors are caused to implement the method for information recommendation according to any one of the present disclosure.

According to one or more embodiments of the present disclosure, the present disclosure provides a computer-readable storage medium having a computer program stored thereon, where the program, when executed by a processor, implements the method for information recommendation according to any one of the present disclosure is implemented.

An embodiment of the present disclosure further provides a computer program product, where the computer program product includes a computer program or instructions, and the computer program or instructions, when executed by a processor, implement the method for information recommendation as described above is implemented.

It should be noted that in this document, relational terms such as "first" and "second" are only used to distinguish one entity or operation from another entity or operation, and do not necessarily require or imply any actual relationship or order between these entities or operations. Moreover, the terms "include", "comprise", or any other variant thereof are intended to cover non-exclusive inclusion, so that a process, method, article, or apparatus that includes a list of elements includes not only those elements, but also other elements not explicitly listed, or further includes elements inherent to such process, method, article, or apparatus. Without more restrictions, an element defined by a statement "include a/an..." does not exclude the presence of another identical element in a process, method, article, or apparatus that includes the element.

The foregoing descriptions are merely specific implementations of the present disclosure but are not intended to limit the protection scope of the present disclosure. Any variation or replacement readily figured out by those skilled in the art within the technical scope disclosed in the present disclosure shall fall within the protection scope of the present disclosure. Therefore, the protection scope of the present disclosure shall be subject to the protection scope of the claims.

**Claims**

1. A method for information recommendation, comprising:

> determining (S110) a historical interaction parameter of a target user for associated information of each candidate object in a candidate object set;
> determining (S120) a target interaction parameter corresponding to each candidate object;
> ranking (S130) the candidate objects in the candidate object set based on the historical interaction parameter of the target user for the associated information of each candidate object and the target interaction parameter corresponding to each candidate object, to obtain a ranking result; and

recommending (S140), based on the ranking result, the associated information of the candidate objects to the target user.

2. The method of claim 1, wherein determining (S120) the target interaction parameter corresponding to each candidate object comprises:

determining a current level of the target user corresponding to each candidate object;

determining a target level corresponding to each candidate object based on the current level of the target user corresponding to each candidate object; and

determining the target interaction parameter corresponding to each candidate object based on the target level corresponding to each candidate object.

3. The method of claim 1, wherein ranking (S130) the candidate objects in the candidate object set based on the historical interaction parameter of the target user for the associated information of each candidate object and the target interaction parameter corresponding to each candidate object, to obtain the ranking result comprises:

determining (S131) a score of each candidate object respectively based on the historical interaction parameter of the target user for the associated information of each candidate object and the target interaction parameter corresponding to each candidate object; and

ranking (S132) the candidate objects in the candidate object set based on the score of each candidate object, to obtain the ranking result.

4. The method of claim 3, wherein determining (S131) the score of each candidate object respectively based on the historical interaction parameter of the target user for the associated information of each candidate object and the target interaction parameter corresponding to each candidate object further comprises:

obtaining a basic score corresponding to each candidate object; and

determining the score of each candidate object respectively based on the historical interaction parameter of the target user for the associated information of each candidate object, the target interaction parameter corresponding to each candidate object, and the basic score corresponding to each candidate object.

5. The method of claim 3, wherein historical interaction operations of the target user for the associated information of the candidate object comprise historical interaction operations of M types, and the determining the score of each candidate object respectively based on the historical interaction parameter of the target user for the associated information of each candidate object and the target interaction parameter corresponding to each candidate object comprises:

determining, for each candidate object, respective scores of the candidate object under the M types respectively based on the historical interaction parameter of the target user for the associated information of the candidate object and the target interaction parameter; and

determining a final score of the candidate object based on the scores of the candidate object under the M types; and

the ranking the candidate objects in the candidate object set based on the score of each candidate object, to obtain the ranking result comprises:

ranking the candidate objects in the candidate object set based on the final score of each candidate object, to obtain the ranking result;

wherein M is a positive integer.

6. The method of claim 5, wherein determining the final score of the candidate object based on the scores of the candidate object under the M types comprises: using a maximum value of the scores of the candidate object under the M types as the final score of the candidate object.

7. The method of claim 2, wherein determining the current level of the target user corresponding to each candidate object comprises:

obtaining, for each candidate object, a level determination condition corresponding to the candidate object ; and

determining the current level of the target user corresponding to the candidate object based on the historical interaction parameter of the target user for the associated information of the candidate object and the level determination condition.

8. An apparatus for information recommendation, comprising:

a first determination module (310), configured to determine a historical interaction parameter of a target user for associated information of each candidate object in a candidate object set;
a second determination module (320), configured to determine a target interaction parameter corresponding to each candidate object;
a ranking module (330), configured to rank the candidate objects in the candidate object set based on the historical interaction parameter of the target user for the associated information of each candidate object and the target interaction parameter corresponding to each candidate object, to obtain a ranking result; and
a recommendation module (340), configured to recommend, based on the ranking result, the associated information of the candidate objects to the target user.

9. An electronic device, wherein the electronic device comprises:

one or more processors;
a storage apparatus configured to store one or more programs;
wherein the one or more programs, when executed by the one or more processors, cause the one or more processors to implement the method of any of claims 1 to 7.

10. A computer-readable storage medium having a computer program stored thereon, wherein the program, when executed by a processor, implements the method of any of claims 1 to 7.

DETERMINE A HISTORICAL INTERACTION PARAMETER OF A TARGET USER FOR ASSOCIATED INFORMATION OF EACH CANDIDATE OBJECT IN A CANDIDATE OBJECT SET — S110

DETERMINE A TARGET INTERACTION PARAMETER CORRESPONDING TO EACH CANDIDATE OBJECT — S120

RANK THE CANDIDATE OBJECTS IN THE CANDIDATE OBJECT SET BASED ON THE HISTORICAL INTERACTION PARAMETER OF THE TARGET USER FOR THE ASSOCIATED INFORMATION OF EACH CANDIDATE OBJECT AND THE TARGET INTERACTION PARAMETER CORRESPONDING TO EACH CANDIDATE OBJECT, TO OBTAIN A RANKING RESULT — S130

RECOMMEND, BASED ON THE RANKING RESULT, THE ASSOCIATED INFORMATION OF THE CANDIDATE OBJECTS TO THE TARGET USER — S140

FIG. 1

DETERMINE A SCORE OF EACH CANDIDATE OBJECT RESPECTIVELY BASED ON THE HISTORICAL INTERACTION PARAMETER OF THE TARGET USER FOR THE ASSOCIATED INFORMATION OF EACH CANDIDATE OBJECT AND THE TARGET INTERACTION PARAMETER CORRESPONDING TO EACH CANDIDATE OBJECT — S131

RANK THE CANDIDATE OBJECTS IN THE CANDIDATE OBJECT SET BASED ON THE SCORE OF EACH CANDIDATE OBJECT, TO OBTAIN THE RANKING RESULT — S132

FIG. 2

BRAND 1
THE NUMBER OF HISTORICAL LIKES IS 2
+ TARGET NUMBER OF LIKES IS 10 → NEED 8 MORE LIKES → SCORE 1 (4)

THE NUMBER OF HISTORICAL FORWARDS IS 1 +
TARGET NUMBER OF FORWARDS IS 5 → NEED 4 MORE FORWARDS → SCORE 2 (12)

THE NUMBER HISTORICAL COLLECTS IS 4
+ TARGET NUMBER OF COLLECTS IS 5 → NEED 1 MORE COLLECTIONS → SCORE 3 (18)

FINAL SCORE (18) OF BRAND 1

BRAND 2
THE NUMBER OF HISTORICAL LIKES IS 8
+ TARGET NUMBER OF LIKES IS 10 → NEED 2 MORE LIKES → SCORE 4 (17.6)

THE NUMBER OF HISTORICAL FORWARDS IS 3
+ T TARGET NUMBER OF FORWARDS IS 5 → NEED 2 MORE FORWARDS → SCORE 5 (17.6)

THE NUMBER HISTORICAL COLLECTS IS 2
+ TARGET NUMBER OF COLLECTS IS 5 → NEED 3 MORE COLLECTIONS → SCORE 6 (15.4)

FINAL SCORE (17.6) OF BRAND 2

BRAND 3
THE NUMBER OF HISTORICAL LIKES IS 4
+ TARGET NUMBER OF LIKES IS 10 → NEED 6 MORE LIKES → SCORE 7 (9.6)

THE NUMBER OF HISTORICAL FORWARDS IS 4
+ TARGET NUMBER OF FORWARDS IS 5 → NEED 1 MORE FORWARD → SCORE 8 (21.6)

THE NUMBER HISTORICAL COLLECTS IS 2
+ TARGET NUMBER OF COLLECTS IS 5 → NEED 3 MORE COLLECTIONS → SCORE 9 (16.8)

FINAL SCORE (21.6) OF BRAND 3

RANK

FIG. 3

310 — FIRST DETERMINATION MODULE

320 — SECOND DETERMINATION MODULE

340 — RECOMMENDATION MODULE

330 — RANKING MODULE

FIG. 4

1000

1001 PROCESSING APPARATUS

1002 ROM

1003 RAM

1004

1005 I/O INTERFACE

1006 INPUT APPARATUS

1007 OUTPUT APPARATUS

1008 STORAGE APPARATUS

1009 COMMUNICATION APPARATUS

FIG. 5

Europäisches
Patentamt

European
Patent Office

Office européen
des brevets

# EUROPEAN SEARCH REPORT

**Application Number**

EP 24 22 1003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/180386 A1 (KONIG FRANCIS [US]) 23 June 2016 (2016-06-23) <br> * paragraph [0057] * <br> * paragraph [0071] * <br> * paragraph [0073] * <br> * paragraph [0114] * <br> * paragraph [0120] * <br> * paragraph [0136] * <br> * figures 3, 12 * <br> ----- | 1-10 | INV. <br> G06Q30/0241 <br> G06Q30/0282 <br> G06Q30/0601 <br> G06Q50/00 |
| | | | TECHNICAL FIELDS SEARCHED (IPC) <br><br> G06Q <br> G06F |

The present search report has been drawn up for all claims

| Place of search | Date of completion of the search | Examiner |
|---|---|---|
| The Hague | 6 March 2025 | van Praagh, Kay |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 1003

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | Publication date | Patent family member(s) | Publication date |
|---|---|---|---|
| US 2016180386 A1 | 23-06-2016 | NONE | |

For more details about this annex : see Official Journal of the European Patent Office, No. 12/82